# EUROPÄISCHE PATENTSCHRIFT

(11) **EP 0 857 901 B1**
(45) Veröffentlichungstag und Bekanntmachung des Hinweises auf die Patenterteilung: **01.10.2003**
(21) Anmeldenummer: 98100762.8
(22) Anmeldetag: 17.01.1998
(51) Int. Cl.: F16K 1/42

(54) **Ventil**
Valve
Soupape

(30) Priorität: 08.02.1997 DE 19704847
(43) Veröffentlichungstag der Anmeldung: 12.08.1998
(73) Patentinhaber: EGMO Ltd., Nahariya 22311 (IL)
(72) Erfinder: Rada, Arie, Nahariya (IL); Grünberg, Joseph, Dr., D.N. Oshrat (IL); Levinger, Joseph, Carmiel (IL)
(74) Vertreter: Patentanwälte Ruff, Wilhelm, Beier, Dauster & Partner

(56) Entgegenhaltungen:
- DE-C- 653 689
- GB-A- 909 405
- US-A- 2 123 477
- US-A- 2 388 710

## Beschreibung

### Anwendungsgebiet und Stand der Technik

Die Erfindung betrifft ein Ventil mit einem Ventilgehäuse und wenigstens einem mit einem Ventilsitz zusammenwirkenden Ventilkörper nach dem Oberbegriff des Anspruchs 1.

In Ventilen, die, wie bei der vorliegenden Erfindung, für den Einsatz in der Chemie- und Nahrungsmittelindustrie vorgesehen sind, spielen Hygiene und Sauberkeit eine bedeutende Rolle. Besonders wichtig ist es, daß sich in den Ventilen keine Verunreinigungen festsetzen können, sie sich leicht und gründlich reinigen lassen und daß sie vor allem zuverlässig sind. Zur Reinigung werden diese Ventile in regelmäßigen Abständen mit einer Reinigungsflüssigkeit und/oder einem Desinfektionsmittel durchgespült, wobei ein abgeschlossener oder nur einseitig offener Raum nicht durchspült werden könnte. In diesem Fall ist die Gefahr von Ablagerungen und Keimherden gegeben. Genauso wichtig ist es, daß ein Austausch von Ersatzteilen schnell und ohne großen Aufwand durchgeführt werden kann.

Um eine sichere Abdichtung der aus mehreren Einzelteilen zusammengefügten Ventile nach außen hin zu gewährleisten werden Dichtungsringe verschiedener Art aus Dichtungsmaterial eingesetzt. An diesen Dichtungsringen, die zwischen Ventilgehäuse, Ventilgehäusedeckel, Ventilkörper und Ventilsitz zur Abdichtung angebracht sind, ergibt sich eine weitere Möglichkeit der Kontamination oder Undichtigkeit nach außen.

Des weiteren ist es vorteilhaft, wenn der Aufbau der Ventile so einfach wie möglich und mit einer geringen Anzahl von Einzelteilen gehalten ist, damit Ausfälle vermieden werden und anfallende Reparatur- oder Austauscharbeiten möglichst einfach und schnell durchgeführt werden können.

Bekannte Ventile haben einen eingesetzten Ventilsitzring, gegen den ein Ventilkörper schließt. Dieser Ventilsitzring ist in einer Ausnehmung im Ventilkörper selber untergebracht. Das Ventilgehäuse ist auf der dem Ventilsitz abgewandten Seite meist von einem Ventilgehäusedeckel geschlossen. Diese Verbindung wird von einem Dichtungsring abgedichtet. Ventilsitzseitig wird meist mittels eines dritten Dichtungsringes ein Anschlußstutzen angeschlossen. Somit sind beim Aufbau eines bekannten Ventils drei Dichtungsringe notwendig, um das Ventil zuverlässig nach außen und in geschlossener Stellung gegen Durchfluß abzudichten. Ist nun bei einem solchen Ventil beispielsweise der Ventilsitzring, der dem größten Verschleiß ausgesetzt ist, auszutauschen, so muß der Ventilgehäusedeckel abmontiert und der Ventilkörper aus der Ventilkammer herausgenommen werden, um den im Ventilkörper sitzenden Ventilsitzring zu erreichen. Das stellt an sich schon einen hohen

Aufwand dar, der die Wartung solcher Ventile in hohem Maße erschwert. Besonders aufwendig wird es dann, wenn zum Ausbau zusätzlich der Ventilschaft, an dem der Ventilkörper sitzt, von der Aktivierungseinheit gelöst werden muß, die das Ventil betätigt. Diese Aktivierungseinheit ist meist auf dem Ventilgehäusedeckel sitzend montiert, wodurch sich der Aufwand nochmals erhöht.

Die US 2,123,477 zeigt ein Ventil mit einem abdichtenden Ventilsitzring, der sich in einer Ausnehmung zwischen einem Gehäuseteil und einem Ventilsitz befindet.

Aus der US 2,388,710 ist ein ähnliches Ventil bekannt. Auch hier ist zwischen Ventilgehäuse und Ventilsitz eine Ausnehmung vorgesehen, in welcher sich der abdichtende Ventilsitzring befindet.

### AUFGABE UND LÖSUNG

Aufgabe der Erfindung ist es, ein Ventil der eingangs erwähnten Art zu schaffen, das mit geringem baulichem Aufwand bei hoher Zuverlässigkeit herzustellen ist, und dabei auch hohe hygienische Ansprüche erfüllt.

Diese Aufgabe wird erfindungsgemäß durch den Anspruch 1 gelöst. Dadurch, daß der Ventilsitzring im Bereich einer Trennfuge zwischen Ven-Ventilgehäuse und einem Ventilsitz, die Trennfuge abdichtend, angeordnet ist, dichtet ein und derselbe Dichtungsring sowohl den Ventilsitz dauerhaft gegen das Ventilgehäuse als auch beim Schließen des Ventils den Ventilkörper gegen den Ventilsitz ab. Somit wird der Aufbau des gesamten Ventils vereinfacht und die Anzahl der kritischen Stellen reduziert. Insgesamt kann ein Ventil, das auf diese Weise aufgebaut ist, mit nur zwei anstatt der sonst üblichen drei Dichtungsringe auskommen. Die Funktion der Dichtungsringe wird dadurch aber keineswegs eingeschränkt.

In einer Ausgestaltung der Erfindung sind der Ventilkörper und der Ventilsitz rotationssymmetrisch ausgeformt. Dadurch braucht der Ventilkörper nicht gegen ein Verdrehen um die Achse des Ventilschaftes gesichert zu werden. In einer weiteren Ausführung ist es besonders günstig, wenn der Ventilkörper tellerförmig und im Bereich seines Außenumfangs abdichtend ausgeführt ist. Im Vergleich zum Durchlaßquerschnitt ist damit die Ventilbaugröße gering. Ferner erfolgt die Abdichtung verteilt auf eine größtmögliche Länge, wodurch sich der maximale Belastungsdruck auf den Ventilsitzring als Kraft pro Fläche für den Ventilsitzring verringert.

In weiterer Ausgestaltung der Erfindung mündet die Trennfuge zwischen Ventilgehäuse und Ventilsitz in eine Ausnehmung, die in etwa entgegengesetzt zu dem Kontaktbereich mit dem Ventilkörper angeordnet ist. Dadurch dichtet der darin sitzende Ventilsitzring sowohl die Trennfuge zwischen Ventilgehäuse und Ventilsitz nach außen ab als auch noch den Ventilsitz gegen den Ventilkörper. Besonders vorteilhaft ist eine Ausführung, bei der die Ausnehmung hinterschnitten, vorzugsweise einseitig durch einen Ringvorsprung des Ventilgehäuses hinterschnitten ist. Dadurch sitzt der Ventilsitzring fest in der Ausnehmung und kann nicht durch eventuelles Haftenbleiben am Ventilkörper aus der Ausnehmung herausgezogen werden.

Für den Fall, daß beispielsweise bei Saugbetrieb in der Ventilkammer ein Unterdruck im Vergleich zur Außenatmosphäre herrscht, dichtet der Ventilsitzring nach Art eines Rückschlagventils ab. Er wird dann in Richtung zur Ventilkammer gegen die Hinterschneidung gedrückt und erfüllt somit wiederum seine Dichtungsfunktion. Eine einseitige Hinterschneidung durch einen Ringvorsprung des Ventilgehäuses ermöglicht ein leichtes Einlegen des Ventilsitzringes in den Ventilsitz, da die Begrenzung der Ausnehmung durch die Hinterschneidung erst beim Einbau des Ventilsitzes in das Ventilgehäuse gebildet wird. Die Einschnitte im Ventilgehäuse und Ventilsitz, die die Ausnehmung bilden, können vorzugsweise zumindest teilweise abgerundet ausgeführt sein. Somit liegt der Dichtungsring am Ventilgehäuse bzw. Ventilsitz an, und es können keine Kontaminationsräume auftreten.

In weiterer Ausgestaltung der Erfindung sind die Abmessungen oder der Querschnitt des Ventilsitzringes größer als die Abmessungen oder der Querschnitt der Ausnehmung, und der Ventilsitzring ist in verformtem Zustand in der Ausnehmung angebracht. Dadurch, daß die Wandung der Ausnehmung den Ventilsitzring konstruktionsbedingt zumindest in einer Richtung zusammendrückt, wird sichergestellt, daß das Ventilgehäuse auch für den Fall nach außen abgedichtet wird, daß keine sonstigen Kräfte wie Druck von außen oder durch den Ventilkörper auf ihn auftreten.

Durch die oben beschriebene Rotationssymmetrie wird die Ausführung des Ventilsitzringes nach Art eines aus Dichtungsmaterial bestehenden Rundschnurdichtringes, vorzugsweise mit angenähertem Kreisquerschnitt, ermöglicht. Auf diese Weise kann man den Ventilsitzring beliebig in die Ausnehmung einlegen. Hinzu kommt, daß dies eine vorteilhafte Form eines Dichtungsringes ist, die aufgrund eines abgerundeten Querschnittes bzw. Kreisquerschnitts besonders beständig gegen Verschleiß ist. Vorzugsweise kann der Ventilsitzring aus elastischem Material, wie z.B. Gummi, bestehen. Denkbar sind aber auch plastisch verformbare Materialien bis hin zu festen Materialien, wie z.B. PTFE (Polytetrafluorethylen).

Bei der Erfindung weisen das Ventilgehäuse und die mit ihm zusammenwirkenden Bauteile (Ventilsitz und/oder Ventilgehäusedeckel) einander zugeordnete Flächen auf, die in Form von Zentrierstufen ausgebildet sind, wobei vorzugsweise jeweils ein Teil der ersten Stufe auf der Seite des Ventilgehäuses leicht abgeschrägt sein kann. Dadurch wird der gesamte Aufbau wesentlich stabiler, denn jeweils zwei Ventilteile können durch die ineinander greifenden Zentrierstufen nicht radial gegeneinander verschoben werden. Zusätzlich wird die paßgenaue Montage des Ventils vereinfacht. Durch das Abschrägen eines Teils zumindest der ersten Stufe, beispielsweise auf der Seite des Ventilgehäuses, kann das jeweilige Ventilteil leichter eingeführt werden, da es durch die Abschrägung selbsttätig zentriert wird.

Besonders vorteilhaft ist an dem Ventilsitz der Anschlußstutzen ausgebildet, vorzugsweise rohrförmig mit nach außen konischem Anschlußflansch. Dadurch wird die Anzahl der Einzelteile des Ventils reduziert und es ergibt sich nicht noch eine weitere Verbindung, an der man für eine Abdichtung sorgen muß.

In weiterer Ausgestaltung ist der Ventilschaft axial beweglich zwischen einer Schließ- und einer Offenstellung geführt, wobei vorzugsweise eine Bohrung durch den das Ventil auf der vom Ventilsitz abgewandten Seite abschließenden und am Ventilgehäuse befestigten Ventilgehäusedeckel diese Ventilschaftführung bildet. Dadurch ist gewährleistet, daß der Ventilkörper exakt gegen den Ventilsitz gefahren wird, um diesen zuverlässig abzudichten, und nicht etwa durch hindurchströmende Flüssigkeit seitlich verschoben wird, was die Dichtungsfunktion erheblich beeinträchtigen würde.

Vorteilhaft ist das Ventilgehäuse mit wenigstens einem Anschluß einstückig ausgeführt. Das reduziert zum einen wieder die Anzahl der Einzelteile und ermöglicht vor allem eine sichere Verbindung mittels dieses Anschlusses mit dem jeweils korrespondierenden Anschluß des Ventilsitzes und des Ventilgehäusedeckels. Über diese Anschlüsse lassen sich die Verbindungen der Ventilteile auf vielfältige Weise herstellen, denkbar wären geschraubte oder vernietete Flansche, Überwurfmuttern und Klemmhülsen, ebenso aber auch Verschweißen oder Verkleben. In einer besonders bevorzugten Ausgestaltung der Erfindung ist ein Anschluß als nach außen konischer Anschlußflansch ausgestaltet. Dies bietet zum einen die Vorteile einer mittels eines üblichen Spannringes mit nur einer Spannschraube schnell hergestellten Verbindung, die dauerhaft ist und Belastungen aufnehmen kann. Zum anderen kann die Verbindung ebenso schnell wieder gelöst werden, falls das Ventil abmontiert werden soll oder Wartungsarbeiten dies erforderlich machen sollten.

In weiterer Ausgestaltung ist in einer zweiten Ausnehmung am Ende der Trennfuge zwischen dem Ventilgehäuse und dem Ventilgehäusedeckel, der Ventilkammer zugewandt, ein Dichtungsring angebracht, der baugleich mit dem Ventilsitzring ist. Dadurch kann der gleiche Dichtungsring verwendet werden, was wiederum Ersatzteile spart und die Wartung vereinfacht.

Vorzugsweise ist diese zweite Ausnehmung ebenfalls hinterschnitten, mit den oben erläuterten Vorteilen einer Hinterschneidung für eine Ausnehmung, in der ein Dichtungsring angebracht ist. Ebenso kann sie bevorzugt durch innen abgerundete Einschnitte im Ventilgehäuse und Ventilgehäusedeckel gebildet werden, mit denselben Vorteilen wie bei der anderen Ausnehmung.

Durch die Erfindung wird ein Ventil geschaffen, das aus nur wenigen Bauteilen besteht und leicht zu montieren und zu reinigen ist. Die Abdichtung zwischen den zusammenmontierten und den bei der Ventilbetätigung zusammenwirkenden Bauteilen ist teilweise miteinander kombiniert und die Abdichtungsstellen sind auf ein Minimum reduziert.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen jeweils gemachten Aussagen nicht in ihrer Allgemeingültigkeit.

### KURZBESCHREIBUNG DER ZEICHNUNGEN

Ein Ausführungsbeispiel der Erfindung ist in den Zeichnungen dargestellt und wird im folgenden näher erläutert. In den Zeichnungen zeigen:
- Fig. 1: einen Längsschnitt durch ein Ventil und
- Fig. 2: einen vergrößerten Ausschnitt, der bei leicht angehobenem Ventilkörper die Verbindung des Ventilgehäuses mit dem Ventilsitz, dem Anschlußstutzen und dem Ventilsitzring zeigt.

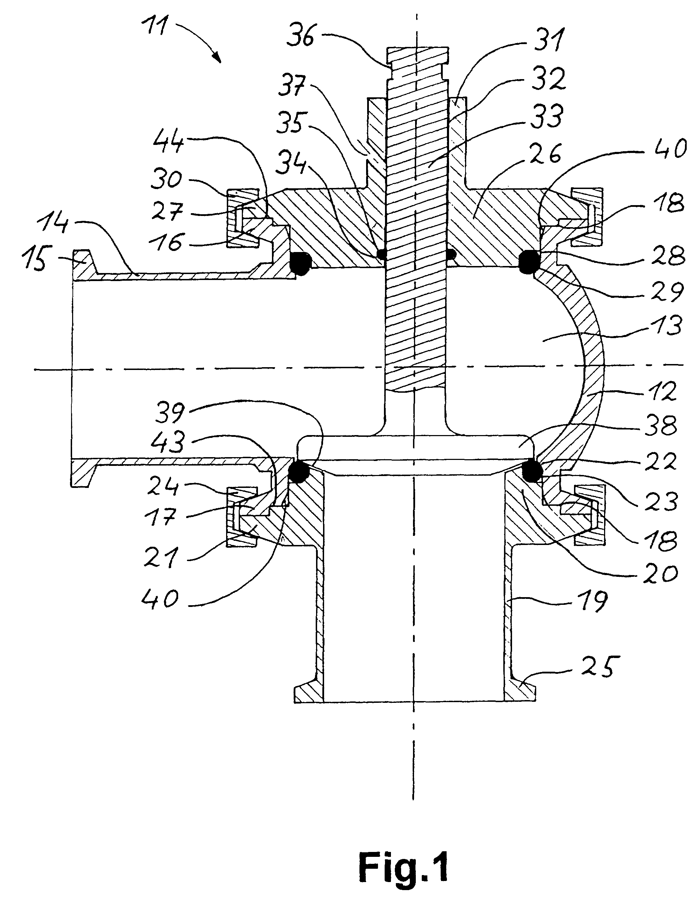

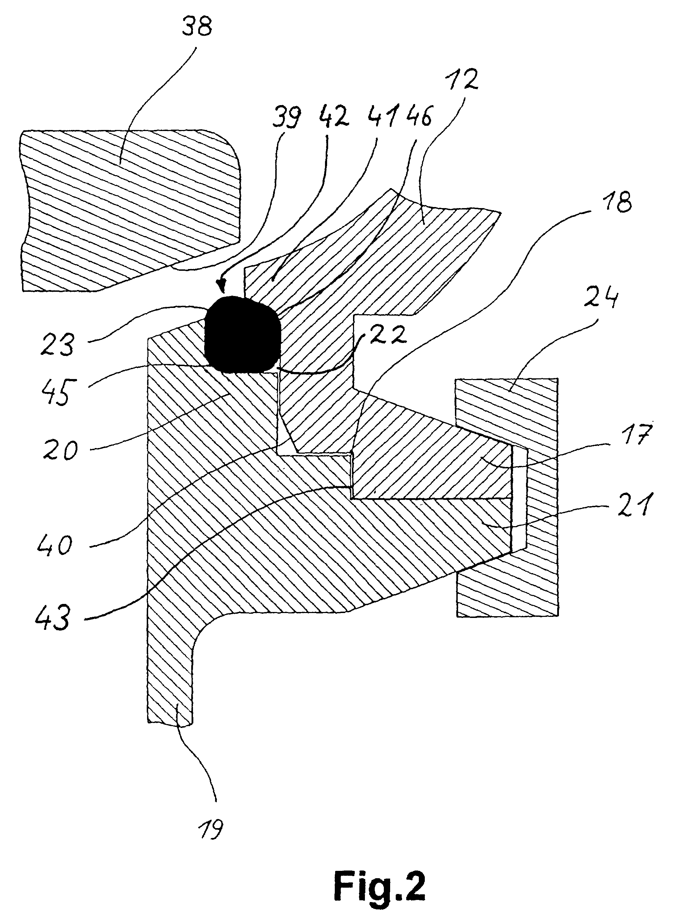

### BESCHREIBUNG EINES BEVORZUGTEN AUSFÜHRUNGSBEISPIELS (FIG. 1 UND 2)

Die Fig. 1 zeigt ein Ventil 11 mit einem Ventilgehäuse 12, das die Form einer an den Polen zusammengedrückten Kugel hat und im Inneren eine Ventilkammer 13 aufweist, die ebenso geformt ist. An der linken Seite geht es in einen rohrförmigen Anschlußstutzen 14 über, dessen Längsachse auf den Mittelpunkt des Ventilgehäuses 12 zeigt. Das Ende des Anschlußstutzens 14 geht zum Anschluß an weitere Verbindungen in einen Anschlußflansch 15 über. Der Anschlußflansch 15 ist nach außen konisch geformt.

Auf der oberen und auf der unteren Seite ist das Ventilgehäuse 12 offen, wobei die Ränder jeweils in Anschlußflansche 16 und 17 münden, die identisch und nach außen hin konisch ausgeführt sind. Die Anschlußflansche 16 und 17 weisen auf ihrer von der Ventilkammer abgewandten Seite Stirnflächen auf, die als Zentrierstufen 18 ausgebildet sind. Dabei ist jeweils ein Teil der von der Ventilkammer 13 aus gezählten ersten Stufe 40 leicht abgeschrägt. Die Öffnung und die Anschlußflansche 16 und 17 sind radialsymmetrisch ausgeformt. Insgesamt ist das gesamte Ventilgehäuse 12 bezüglich seiner horizontalen mittleren Schnittebene symmetrisch.

In die untere Öffnung wird ein Ventilsitz 20 eingesetzt, der an einem Anschlußstutzen 19 vorgesehen ist und radial nach außen in einen nach außen konisch geformten Anschlußflansch 21 übergeht. Weiterhin weist er Endflächen auf, die als zu den Zentrierstufen 18 des Ventilgehäuses 12 korrespondierende Zentrierstufen ausgebildet sind, wobei die beiden Zentrierstufen 18 bei der Montage ineinander greifen. Die Trennfuge 43 zwischen den beiden Zentrierstufen 18 geht ventilkammerseitig in eine Ausnehmung 22 über, die durch einen nach innen gerichteten Ringvorsprung 41 des Ventilgehäuses 12 und den Ventilsitz 20 hinterschnitten ausgeformt ist.

Der Ringvorsprung 41 begrenzt eine ringförmige Öffnung 42, die schmaler ist als die Innenabmessungen der Ausnehmung 22, in die Ausnehmung 22 der Ventilsitzring 23 eingelegt ist. Dieser ist als Rundschnurdichtring aus Kunststoff, Gummi oder anderen üblicherweise verwendeten Materialien mit angenähertem Kreisquerschnitt ausgeführt und steht mit einem Teil seines Querschnittes über die zur Ventilkammer 13 zeigende Seite des Ventilsitzes 20 über. Die Innenkanten 45 und 46 der Ausnehmung 22 sind derart abgerundet ausgeführt, daß der eingelegte Rundschnurdichtring 23 glatt an ihnen anliegt und keine Zwischenräume zwischen ihm und dem Ventilgehäuse 12 bzw. Ventilsitz 20 entstehen. Geschlossen wird die Verbindung zwischen Ventilgehäuse 12 und Ventilsitz 20 über einen Spannring 24, der über die beiden Anschlußflansche 17 und 21 gelegt wird und passend zur Form der Anschlußflansche 17, 21 innen konisch geformt ist. An seinem anderen Ende geht der Anschlußstutzen 19 in einen Anschlußflansch 25 über, der identisch mit dem Anschlußflansch 15 des anderen Anschlußstutzens 14 ist.

In die obere Öffnung des Ventilgehäuses 12 ist der Ventilgehäusedeckel 26 eingesetzt, der am äußeren Ende seines Umfangs einen angeformten Anschlußflansch 27 aufweist. Weiterhin besitzt er Endflächen, die als zu den Zentrierstufen 18 des Ventilgehäuses 12 korrespondierende Zentrierstufen ausgebildet sind. Diese beiden Zentrierstufen greifen bei der Montage ineinander. Zwischen den beiden Zentrierstufen verläuft eine Trennfuge 44, die zur Ventilkammer 13 hin in eine hinterschnittene Ausnehmung 28 mündet. Die Hinterschneidung wird durch die überstehenden Kanten des Ventilgehäuses 12 und des Ventilgehäusedeckels 26 gebildet. In der Ausnehmung 28 ist ein Dichtungsring 29 angebracht, der wie der Ventilsitzring 23 als Rundschnurdichtring mit angenähertem Kreisquerschnitt ausgeführt ist. Die Verbindung zwischen Ventilgehäuse 12 und Ventilgehäusedeckel 26 wird über einen über die Anschlußflansche 16, 27 gelegten Spannring 30 geschlossen, der identisch ist zu dem unteren Spannring 24.

In der Zeichnung nach oben hin geht der Ventilgehäusedeckel 26 in ein Ansatzstück 31 über, das einen erheblich geringeren Querschnitt aufweist. Zentrisch durch den Ventilgehäusedeckel 26 und das Ansatzstück 31 verläuft eine Bohrung, die die Ventilschaftführung 32 bildet. In ihr ist der Ventilschaft 33 axial beweglich gelagert, der mit der Längsachse des Anschlußstutzens 19 fluchtet. Die Ventilschaftführung 32 nahe bei der Ventilkammer 13 ist auf ihrer Innenseite mit einer Ausnehmung 34 versehen. In diese ist die Ventilschaftdichtung 35 eingelegt, an der der Ventilschaft 33 vorbeiläuft. Auf diese Weise wird die Ventilkammer 13 gegen die Ventilschaftführung 32 abgedichtet. Am oberen Ende ist der Ventilschaft 33 mit einer radialen Einschnürung versehen, die die Ventilschaftkupplung 36 bildet. Mittels dieser Ventilschaftkupplung 36 wird der Ventilschaft 33 an eine in der Zeichnung nicht dargestellte Betätigungseinheit, z.B. einen Pneumatikzylinder, angeschlossen, die den Ventilschaft 33 und damit das gesamte Ventil 11 betätigt. Der Ansatz 31 ist mit einer schräg nach unten weisenden, in die Ventilschaftführung 32 reichenden, Bohrung 37 versehen, über die die Ventilschaftführung 32 mit Schmiermittel versorgt werden kann.

Der Ventilschaft 33 weist an seinem in der Ventilkammer 13 befindlichen Ende den Ventilkörper 38 auf. Dieser ist tellerförmig ausgeführt und weist zum Ventilsitzring 23 hin eine abgeschrägte untere Kante auf, die den Kontaktbereich 39 zum Ventilsitzring 23 bildet. Dieser Kontaktbereich 39 weist denselben Winkel zur Horizontalen auf wie die ihm zugeordnete Kante des Ventilsitzes 20. Der Durchmesser des Ventilkörpers 38 ist so bemessen, daß er einerseits noch vollständig den Ventilsitzring 23 überdeckt, andererseits aber radial nicht das Ventilgehäuse 12 erreicht. Der Durchmesser des Ventilkörpers 38 ist geringer als der Durchmesser der oberen und der unteren Öffnung 42 im Ventilgehäuse 12, damit er einerseits den Dichtring erreicht und andererseits ausgebaut werden kann.

Wie in Fig. 2 in stark vergrößertem Maßstab gezeigt, wird der Ventilkörper 38 innerhalb des Ringvorsprunges 41 geführt. Hier erkennt man auch die abgerundeten Innenkanten 45 und 46 der Ausnehmung 22. Ebenso ist auch die obere Ausnehmung 28 mit abgerundeten Innenkanten ausgebildet.

### FUNKTION

Zur Montage des Ventils wird der Ventilsitzring 23 in die Ausnehmung 22 im Ventilsitz 20 gelegt und der Ventilsitz 20 mit dem Anschlußstutzen 19 in die dafür vorgesehene Öffnung im Ventilgehäuse 12 eingeführt. Das Einführen wird durch die Zentrierstufen 18 und vor allem durch die Abschrägung eines Teils der ersten Stufe 40 auf der Seite des Ventilgehäuses 12 erleichtert, die selbsttätig dafür sorgen, daß der Ventilsitz 20 zentrisch in der unteren Öffnung im Ventilgehäuse 12 sitzt. Dann wird über die Anschlußflansche 17 und 21 des Ventilgehäuses 12 und des Ventilsitzes 20 der Spannring 24 gelegt und mittels mindestens einer Schraube in Umfangsrichtung angezogen, so daß sich sein Durchmesser verringert und er sich in radialer Richtung nach innen über die Anschlußflansche 17 und 21 schiebt. Durch die konische Ausformung wird die Kraft, die in radialer Richtung auf den Spannring 24 wirkt, in eine ausschließlich radiale und eine ausschließlich axiale Kraftkomponente aufgeteilt, wobei die axiale Komponente den Ventilsitz 20 mit dem Ventilgehäuse 12 verbindet.

Dadurch, daß der Querschnitt des Ventilsitzringes 23 größer ist als die Ausnehmung 22, die ihn aufnimmt, wird er durch die Wandungen der Ausnehmung 22 unter Druckeinwirkung verformt. Auf diese Weise dichtet er die Verbindung des Ventilsitzes 20 mit dem Ventilgehäuse 12, d.h. die Trennfuge 43, zuverlässig ab. Da die Ausnehmung 22 zusätzlich noch durch den Ringvorsprung 41 des Ventilgehäuses 12 hinterschnitten ist, kann der Ventilsitzring 23 nicht aus seiner Ausnehmung 22 heraus in Richtung Ventilkammer 13 wandern, falls er beispielsweise am Ventilkörper 38 haften bleiben sollte. Auch für den Fall, daß in der Ventilkammer 13 im Vergleich zur Außenatmosphäre ein Unterdruck herrscht, dichtet der Ventilsitzring 23 noch zuverlässig ab. Dann wird er nämlich gegen den Ringvorsprung 41 des Ventilgehäuses 12 und die überstehende Kante des Ventilsitzes 20, die die Hinterschneidung bilden, gedrückt und übt so nach Art eines Rückschlagventils seine Dichtungsfunktion aus. Durch die abgerundeten Innenkanten 45 und 46 der Ausnehmung 22 liegt er flächig am Ventilgehäuse 12 bzw. Ventilsitz 20 an und verhindert ein Entstehen von Kontaminationsräumen zwischen diesen Teilen. Auf diese Weise können die hohen hygienischen Ansprüche, denen das Ventil 11 genügen soll, erreicht werden.

Beim Einbau des Ventilgehäusedeckels 26 wird zuerst die Ventilschaftdichtung 35 in die dafür vorgesehene Ausnehmung 34 eingelegt. Genau wie beim Einbau des Ventilsitzes 20 wird der Dichtungsring 29 in den Teil der Ausnehmung 28 gelegt, der im Ventilgehäusedeckel 26 ausgeformt ist. Dann wird der Ventilschaft 33 mit dem angeformten Ventilkörper 38 durch die Ventilschaftführung 32 geführt, und der so bestückte Ventilgehäusedeckel 26 in die obere Öffnung des Ventilgehäuses 12 eingeführt. Die Zentrierstufen 18 sorgen wiederum für ein leichtes Einführen und einen exakten zentrischen Sitz. Der Spannring 30 wird über die beiden Anschlußflansche 16 und 27 gelegt und wie oben besschrieben mit mindestens einer Spannschraube angezogen, wodurch eine formschlüssige und dichte Verbindung zwischen Ventilgehäuse 12 und Ventilgehäusedeckel 26 hergestellt wird. Auch die Ausnehmung 28 für den oberen Dichtungsring 29 ist hinterschnitten ausgeführt, mit den oben beschriebenen Vorteilen, die sich daraus ergeben. Über die Anschlußflansche 15 und 25 an den Enden der beiden Anschlußstutzen 14 und 19 kann das fertig zusammengebaute Ventil mit Hilfe von Spannringen an weiterführende Verbindungen angeschlossen werden.

Mit Hilfe der Ventilschaftkupplung 36 wird der Ventilschaft 33 mit einer Betätigungseinheit verbunden, die den Ventilschaft 33 in axialer Richtung betätigt. Somit ist das Ventil 11 vollständig aufgebaut und betriebsbereit.

In geöffneter Stellung ist der Ventilkörper 38 in der Ventilkammer 13 nach oben gefahren. Dabei sollte der Ventilkörper 38 und die ihm gegenüberliegende Fläche des Ventilgehäusedekkels 26 so ausgeformt sein, daß keine abgeschlossenen oder nur einseitig geöffneten Räume entstehen, in denen sich Ablagerungen bilden können, die nicht von dem durchströmenden Medium selber oder von einem durchgespülten Reinigungsmittel entfernt werden können.

Zum Schließen des Ventils 11 wird der Ventilschaft 33 und damit auch der Ventilkörper 38 von der Betätigungseinheit in das Innere der Ventilkammer 13 eingefahren, so daß der Ventilkörper 38 mit der Kontaktfläche 39 auf dem Ventilsitzring 23 zu liegen kommt und diesen zur Abdichtung durch Ausüben von Druck verformt. Mit zunehmender Verformung des Ventilsitzringes 23 durch die axiale Bewegung des Ventilkörpers 38 auf den Ventilsitz 20 zu steigt auch die dazu benötigte Kraft an. Deswegen ist der Querschnitt des Ventilsitzringes 23 so zu gestalten, daß ein ausreichender Teil dieses Querschnittes über die der Kontaktfläche 39 zugeordnete Fläche des Ventilsitzes 20 hinausragt, gegen die dann die Kontaktfläche 39 drückt, um das Ventil 11 unter elastischer Verformung des Ventilsitzringes 23 gegen Durchfluß abzudichten. Der Ventilkörper 38 kann so bemessen sein, daß er unter der normalen Schließkraft zwar zum Teil verformt, aber nicht durch Verquetschen beschädigt werden kann. Gegebenenfalls kann der Ventil-Schließweg durch Anlage der Kontaktfläche 39 des Ventilkörpers 38 an der gegenüberliegenden Fläche des Ventilsitzes 20 begrenzt sein.

## Patentansprüche

1. Ventil mit einem Ventilgehäuse (12) und wenigstens einem mit einem Ventilsitz (20) zusammenwirkenden Ventilkörper (38), der an einem axial betätigbaren Ventilschaft (33) angebracht ist, wobei der Ventilsitz einen Ventilsitzring (23) aus Dichtungsmaterial aufweist, auf dem der Ventilkörper (38) bei geschlossenem Ventil (11) dichtend aufsitzt, und wobei der Ventilsitzring im Bereich einer Trennfuge (43) zwischen Ventilgehäuse und Ventilsitz, die Trennfuge abdichtend, angeordnet ist, **dadurch gekennzeichnet, daß** das Ventilgehäuse (12) und der mit ihm zusammenwirkende Ventilsitz (20) und/oder der Ventilgehäusedeckel (26) einander zugeordnete Flächen aufweisen, die in Form von Zentrierstufen ausgebildet sind.

2. Ventil nach Anspruch 1, **dadurch gekennzeichnet, daß** der Ventilkörper (38) und der Ventilsitz (20) im wesentlichen rotationssymmetrisch ausgeformt sind.

3. Ventil nach Anspruch 1 oder 2, **dadurch gekennzeichnet, daß** der Ventilkörper (38) tellerförmig und vorzugsweise im Bereich seines Außenumfanges abdichtend ausgeführt ist.

4. Ventil nach einem der vorhergehenden Ansprüche, **dadurch gekennzeichnet, daß** die Trennfuge (43) zwischen Ventilgehäuse (12) und Ventilsitz (20) in eine Ausnehmung (22) mündet, die etwa entgegengesetzt zu dem Kontaktbereich mit dem Ventilkörper (38) angeordnet ist und insbesondere hinterschnitten ist, vorzugsweise einseitig durch einen Ringvorsprung (41) des Ventilgehäuses (12).

5. Ventil nach Anspruch 4, **dadurch gekennzeichnet, daß** der Querschnitt des Ventilsitzringes (23) größer ist als die Abmessungen der Ausnehmung (22) und der Ventilsitzring in verformtem Zustand in der Ausnehmung (22) angebracht ist, wobei der Ventilsitzring vorzugsweise nach Art eines aus Dichtungsmaterial bestehenden Rundschnurdichtrings, insbesondere mit angenähertem Kreisquerschnitt, ausgeführt ist.

6. Ventil nach Anspruch 1, **dadurch gekennzeichnet, daß** jeweils ein Teil der ersten Stufe (40) am Ventilgehäuse (12) leicht abgeschrägt ist.

7. Ventil nach einem der vorhergehenden Ansprüche, **dadurch gekennzeichnet, daß** an dem Ventilsitz (20) ein Anschlußstutzen (14) ausgebildet ist, vorzugsweise rohrförmig mit einem nach außen konischen Anschlußflansch (15).

8. Ventil nach einem der vorhergehenden Ansprüche, **dadurch gekennzeichnet, daß** der Ventilschaft zwischen einer Schließ- und einer Offenstellung (33) axial beweglich geführt ausgebildet ist, wobei vorzugsweise eine Bohrung durch den das Ventil (11) auf der vom Ventilsitz (20) abgewandten Seite abschließenden und am Ventilgehäuse (12) befestigten Ventilgehäusedeckel (26) diese Ventilschaftführung (32) bildet.

9. Ventil nach einem der vorhergehenden Ansprüche, **dadurch gekennzeichnet, daß** das Ventilgehäuse (12) einstückig mit wenigstens einem Anschluß (16, 17) ausgeführt ist, wobei insbesondere wenigstens ein Anschluß (16, 17) als vorzugsweise nach außen konischer Anschlußflansch ausgestaltet ist.

10. Ventil nach einem der vorhergehenden Ansprüche, **dadurch gekennzeichnet, daß** in einer zweiten Ausnehmung (28) am Ende der Trennfuge (44) zwischen dem Ventilgehäuse (12) und dem Ventilgehäusedeckel (26), der Ventilkammer (13) zugewandt, ein Dichtungsring (29) angebracht ist, der mit dem Ventilsitzring (23) baugleich ist, wobei die zweite Ausnehmung vorzugsweise hinterschnitten ist.

## Claims

1. Valve with a valve housing (12) and at least one valve body (38) co-operating with a valve seat (20) and which is fitted to an axially actuatable valve stem (33), the valve seat having a valve seat ring (23) of sealing material on which is sealingly mounted the valve body (38) when the valve (11) is closed and the valve seat ring is positioned and seals a parting line (43) between the valve housing and the valve seat, **characterized in that** the valve housing (12) and the valve seat (20) cooperating therewith and/or the valve housing cover (26) have mutually associated surfaces constructed in the form of centring steps.

2. Valve according to claim 1, **characterized in that** the valve body (38) and valve seat (20) are constructed in a substantially rotationally symmetrical manner.

3. Valve according to claim 1 or 2, **characterized in that** the valve body (38) is plate-shaped and is preferably sealingly constructed in the vicinity of its outer circumference.

4. Valve according to one of the preceding claims, **characterized in that** the parting line (43) between valve housing (12) and valve seat (20) issues into a recess (22), which is roughly opposite to the contact area with the valve body (38) and is in particular undercut, preferably on one side by a ring projection (41) of the valve housing (12).

5. Valve according to claim 4, **characterized in that** the cross-section of the valve seat ring (23) is larger than the dimensions of the recess (22) and the valve seat is fitted in the recess (22) in the deformed state, the valve seat ring preferably being constructed in the manner of a toroidal sealing ring made from sealing material and in particular with an approximately circular cross-section.

6. Valve according to claim 1, **characterized in that** in each case part of the first step (40) on the valve housing (12) is slightly bevelled.

7. Valve according to one of the preceding claims, **characterized in that** on the valve seat (20) is constructed a connecting piece (14), preferably tubular with an outwardly conical connecting flange (15).

8. Valve according to one of the preceding claims, **characterized in that** the valve stem is axially movably guided between a closing and an open position (33) and said valve stem guide (32) is preferably formed by a hole through the valve housing cover (26) terminating the valve (11) on the side remote from the valve seat (20) and fixed to the valve housing (12).

9. Valve according to one of the preceding claims, **characterized in that** the valve housing (12) is constructed in one piece with at least one connection (16, 17) and in particular at least one connection (16, 17) is preferably constructed as an outwardly conical connecting flange.

10. Valve according to one of the preceding claims, **characterized in that** in a second recess (28) at the end of the parting line (44) between the valve housing (12) and the valve housing cover (26), facing the valve chamber (13), is fitted a sealing ring (29), which has the same construction as the valve seat ring (23), the second recess preferably being undercut.

## Revendications

1. Soupape avec un boîtier de soupape (12) et au moins un corps de soupape (38) agissant ensemble avec un siège de soupape (20), lequel corps est situé sur une tige de soupape (33) pouvant être actionnée en direction axiale, le siège de soupape présentant un siège rapporté (23) en un matériau étanchant, sur lequel repose le corps de soupape (38) de manière étanchante quand la soupape (11) est fermée, et le siège rapporté étant disposé dans le domaine d'un joint de séparation (43) entre le boîtier de soupape et le siège de soupape en étanchant le joint de séparation, **caractérisée en ce que** le boîtier de soupape (12) et le siège de soupape (20) agissant ensemble et/ou le couvercle du boîtier de soupape (26) présentent des surfaces réciproquement associées, réalisées en forme de gradins de centrage.

2. Soupape d'après la revendication 1, **caractérisée en ce que** le corps de soupape (38) et le siège de soupape (20) sont essentiellement formés de manière à présenter une symétrie de révolution.

3. Soupape d'après la revendication 1 ou 2, **caractérisée en ce que** le corps de soupape (38) est réalisé en forme de plateau et de préférence de manière étanchante dans le domaine de son périmètre extérieur.

4. Soupape d'après une des revendications précédentes, **caractérisée en ce que** le joint de séparation (43) entre le boîtier de soupape (12) et le siège de soupape (20) débouche dans un creux (22), lequel est disposé à peu près du côté opposé au domaine de contact avec le corps de soupape (38) et qui présente notamment une contre-dépouille, de préférence d'un seul côté par une saillie annulaire (41) du boîtier de soupape (12).

5. Soupape d'après la revendication 4, **caractérisée en ce que** la section transversale du siège rapporté (23) est plus grande par rapport aux dimensions du creux (22) et que le siège rapporté est appliqué dans le creux (22) dans un état déformé, le siège rapporté étant réalisé de préférence à la manière d'un joint torique en matière imperméabilisante, notamment avec une section transversale approximativement circulaire.

6. Soupape d'après la revendication 1, **caractérisée en ce que** respectivement une partie du premier gradin (40) au boîtier de soupape (12) est légèrement chanfreinée.

7. Soupape d'après une des revendications précédentes, **caractérisée en ce qu'**une tubulure de raccordement (14) est réalisée à partir du siège de soupape (20), de préférence en forme de tuyau avec une bride de raccordement (15) de forme conique vers l'extérieur.

8. Soupape d'après une des revendications précédentes, **caractérisée en ce que** la tige de soupape est réalisée en étant guidée de manière axialement mobile entre une position fermée et une position ouverte (33), une forure à travers le couvercle de boîtier de soupape (26) formant de préférence ce moyen de guidage de tige de soupape (32), couvercle qui referme la soupape (11) du côté opposé au siège de soupape (20) et qui est fixé auprès du boîtier de soupape (12).

9. Soupape d'après une des revendications précédentes, **caractérisée en ce que** le boîtier de soupape (12) est réalisé d'une seule pièce avec au moins un raccord (16, 17), au moins un raccord (16, 17) étant notamment structuré en tant que bride de raccordement de préférence conique vers l'extérieur.

10. Soupape d'après une des revendications précédentes, **caractérisée en ce que** dans un deuxième creux (28) à l'extrémité du joint de séparation (44), entre le boîtier de soupape (12) et le couvercle de boîtier de soupape (26), est appliqué une bague d'étanchéité (29) orientée en direction de la cage de soupape (13), laquelle bague présente les mêmes caractéristiques constructives que le siège rapporté (23), le deuxième creux présentant de préférence une contre-dépouille.
